Europäisches Patentamt

**European Patent Office**

**Office européen des brevets**

(19)

(11) Numéro de publication: **0 034 336**
**B1**

(12)     # FASCICULE DE BREVET EUROPEEN

(45) Date de publication du fascicule du brevet: **29.06.83**

(21) Numéro de dépôt: **81100982.8**

(22) Date de dépôt: **12.02.81**

(51) Int. Cl.³: **H 04 Q 1/457,**
**H 04 Q 11/04**

(54) **Emetteur numérique de fréquences.**

(30) Priorité: **19.02.80 FR 8003572**

(43) Date de publication de la demande:
**26.08.81 Bulletin 81/34**

(45) Mention de la délivrance du brevet:
**29.06.83 Bulletin 83/26**

(84) Etats contractants désignés:
**AT BE CH DE FR GB IT LI LU NL SE**

(56) Documents cités:
**CH - A - 483 176**
**GB - A - 2 007 942**

**COMMUTATION ET ELECTRONIQUE, no. 59,
octobre 1977 PARIS (FR) H. CAMPAGNO et al.:
"Système E 10. L'équipement de tonalités et
auxiliaires", pages 99 et 115.**

**COMMUTATION ET ELECTRONIQUE, no. 23,
octobre 1968 PARIS (FR) F. TALLEGAS: "Les
problèmes de réserve de connexion en
commutation temporelle", pages 43 à 57.**

(73) Titulaire: **COMPAGNIE INDUSTRIELLE DES
TELECOMMUNICATIONS CIT-ALCATEL S.A. dite:
12, rue de la Baume
F-75008 Paris (FR)**

(72) Inventeur: **Duplessis, Philippe
14, avenue Adrienne
F-92700 Colombes (FR)**
Inventeur: **Delpit, Philippe
16, rue Chardon Lagache
F-75016 Paris (FR)**

(74) Mandataire: **Weinmiller, Jürgen et al,
Zeppelinstrasse 63
D-8000 München 80 (DE)**

Courier Press, Leamington Spa, England.

## Emetteur numérique de fréquences

L'invention concerne nu émetteur numérique de fréquences commandé par un processeur, et plus particulièrement un générateur numérique de signalisation mutlifréquence pour un autocommutateur téléphonique de type temporel.

On connaît divers types de générateurs de signaux numériques. Le brevet français n° 2 087 711 initulé "Générateur numérique de fréquence" décrit un générateur qui comporte un oscillateur et un dispositif de stabilisation par filtre numérique linéaire défini par des équations aux différences finies.

Le brevet français n° 2 098 528 intitulé "Générateur numérique de signaux" décrit un générateur de signaux sinusoïdaux comportant une table de N valeurs de la fonction y = sinx, et des moyens d'exploration périodique de la table. La fréquence f du signal est liée à la fréquence F d'exploration de la table et au pas d'exploration k par la relation:

f x N = kF avec une valeur maximale de k donnée par le théoréme de SHANNON :

$$X = 16 \left[ Log_2 \frac{|v|}{12} + Log_2G \right] = 16 \, Log_2G . \frac{|v|}{12}$$

Par contre pour réaliser une addition de signaux, par exemple pour créer des signaux bifréquences à partir d'un générateur de signaux sinusoïdaux, il faut réaliser une décompression pour linéariser les signaux. Pour cela une méthode connue consiste à utiliser une approximation permettant de faite la linéarisation à l'aide d'un circuit de décalage:
Soit S le signal décompressé, le signal compressé s'écrit

$Log_2 \, S = c + m$ (c caractéristique et m mantisse du logarithme avec 0 < m < 1).
L'approximation consiste à remplacer $2^m$ par 1 + m soit

$$S = 2^c \, 2^m \not\equiv 2^c \, (1 + m)$$

La décompression consiste à décaler la quantité 1 + m d'un nombre de poids binaires égal à c.

Cette approximation entraîne une distorsion qui peut être éliminée par utilisation d'une table de correspondance entre les valeurs de m et celle d'un paramètre p tel que $2^m = 1 + p$, cette table étant par exemple stockée dans une mémoire morte. Cette méthode est utilisée par exemple dans le générateur numérique de fréquences décrit dans le brevet français n° 2 087 711 déjà cité.

L'invention a pour but de réaliser un dispositif permettant, à partir des signaux fournis par un générateur numérique, de créer les différents signaux multifréquences correspondant aux codes utilisés dans un central téléphonique, et

k < N/2. Le générateur décrit comporté également un circuit additionneur qui permet de délivrer un signal composé de 2 fréquences. D'autre part on sait qu'en transmission numérique les signaux sont codés suivant une loi de compression logarithmique approchée par des segments de droite (avis G.711 du C.C.I.T.T. définissant la loi A).

On peut considérer que le codage suivant la loi A est approximativement logarithmique, avec un signal codé Y en fonction de la tension V en millivolts de la forme:

$$Y = 16 \, Log_2 \frac{|v|}{12}$$

Ceci introduit une distorsion très souvent acceptable. On utilise cette forme pour appliquer un gain G au signal par une simple addition des valeurs codées: le signal codé X correspondant au signal amplfié G x V s'écrit en effet:

de distribuer ces signaux sur des voies numériques par exemple sur des liaisons multiplex de type MIC. La création et la distribution des signaux multifréquences sont commandées par un processeur, par exemple le calculateur de commande de l'autocommutateur dans le cas d'une commande centralisée de ce dernier.

Le but est atteint selon l'invention par un émetteur numérique de fréquences comportant un générateur fournissant des signaux de codes monofréquences par exploration cyclique d'une table sous le contrôle d'une base de temps ladite table comportant les valeurs de la fonction sinus sous forme compressée, le générateur comportant des moyens d'amplification des signaux compressés et l'émetteur numérique comportant un additionneur permettant la combinaison de deux signaux monofréquences pour produire un signal bifréquence compressé, caractérisé par le fait qu'il comporte un distributeur de fréquences formé d'une mémoire pour enregistrer les signaux bifréquences fournis par l'additionneur, de moyens d'émission desdits signaux bifréquences sur un canal numérique et de moyens de sélection pilotés par un calculateur par l'intermédiaire d'un module d'échanges lesdits moyens de sélection permettant d'affecter à toute voie du canal numérique le contenu de n'importe quel mot de ladite mémoire.

L'invention va être précisée par la description qui va suivre d'un mode préféré de réalisation de l'invention, donné à titre d'exemple non limitatif en référence aux dessins annexés qui représentent

—figure 1 : un schéma d'ensemble de l'émetteur numérique selon l'invention.

—figure 2 : un schéma d'un générateur des signaux monofréquences utilisé dans l'émetteur selon la figure 1

—figure 3 : un schéma d'un additionneur utilisé dans l'émetteur selon la figure 1

—figure 4 : un schéma d'un distributeur de fréquences utilisé dans l'emetteur selon la figure 1

—figure 5 : un diagramme des principaux signaux de pilotage du distributeur de la figure 4

—figure 6 : le format des messages échangés avec le calculateur.

Dans cette application l'émetteur numérique délivre sur les voies multiplexées d'une liaison MIC, des signaux mono ou bifréquences de la forme :

$$A_1 \sin 2 \Pi \, fi \, T + A_j \sin 2 \Pi \, fj \, T$$

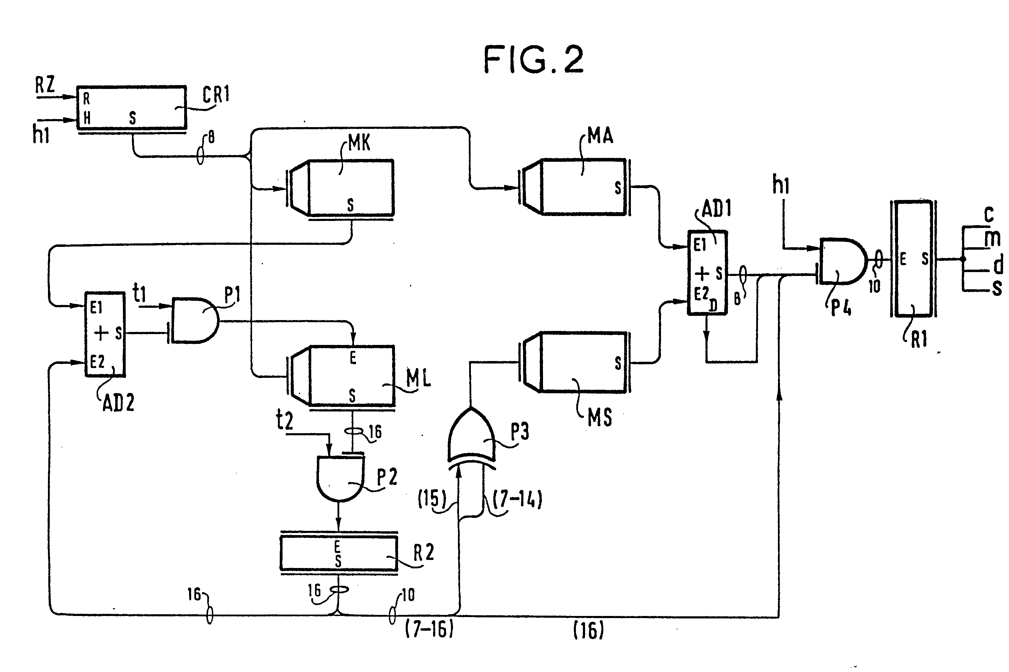

Les valeurs de f désignent les fréquences des codes utilisés, et les coefficients A déterminent l'amplitude des signaux délivrés. Les coefficients A dépendent du code multifréquence de la fréquence émise, et tiennent compte de l'affaiblissement propre au système jusqu'au niveau de la liaison MIC. Comme on le verra ces coefficients A sont enregistrés sous forme compressée dans une mémoire MA (figure 2).

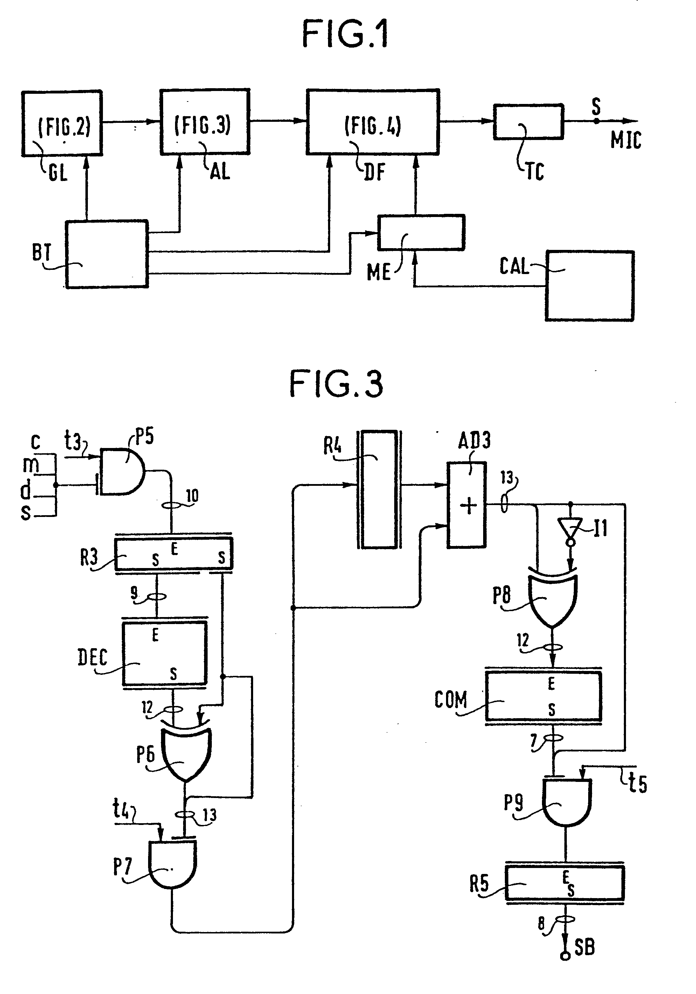

Dans la figure 1, l'émetteur numérique comporte un générateur de signaux logarithmiques GL qui délivre des signaux monofréquences, un additionneur logarithmique AL qui effectue la somme de deux signaux monofréquences sous forme compressée et un distributeur de fréquences DF commandé par un calculateur CAL par l'intermédiaire d'un module d'échange ME. Les circuits GL, AL, DF, ME, reçoivent les signaux d'une base de temps BT, le calculateur CAL étant le calculateur de commande d'un autocommutateur à commande centralisée.

En sortie du distributeur de fréquences DF, les signaux traversent un transcodeur TC pour adaptation au code HDB3 de transmission sur la liaison MIC (figure 1);

Dans cette application, le générateur GL fonctionne de manière cyclique indépendamment du calculateur CAL. La durée du cycle du générateur est de 125 microsecondes et elle est égale à la période d'échantillonnage sur les voies MIC aux normes européennes. A chaque cycle le générateur émet un échantillon de chaque fréquence et pour chacun des codes utilisés. On voit donc qu'il n'y a pas nécessité d'utiliser le calculateur à ce niveau, puisque tous les signaux possibles sont délivrés à chaque cycle. La mémoire qui contient les coefficients A peut donc être une mémoire morte.

Le générateur GL est représenté à la figure 2.

Ce générateur produit des signaux monofréquences de la forme qui est déjà indiquée plus haut. La fonction sinus est fournie par exploration d'une table contenue dans une mémoire MS sous forme logarithmique. Les coefficients A sont stockés dans une mémoire MA. La longueur des mots dans les mémoires MA et MS est de 8 e.b. Les sorties de ces mémoires sont reliées à l'entrée d'un additionneur AD1 et le signal de sortie de l'additionneur est stocké dans un registre R1.

Le signal de sortie du générateur GL comporte 10 e.b. : 3 e.b. pour la caractéristique c, 5 e.b. pour la mantisse m, un e.b. d qui provient de la sortie de débordement de l'additionneur AD1, et un e.b. s qui indique le signe de la fonction sinus qui provient de la sortie d'un registre R2.

Le distributeur fournit 128 échantillons de signaux par cycle. Compte tenu qu'il s'agit de signaux bifréquences, il a été donné au générateur GL une capacité double. De cette manière deux échantillons consécutifs fournis par la générateur GL l'additionneur AL permettent la création d'un échantillon bifréquence. Le générateur GL est piloté par un signal h1 de la base de temps BT d'une fréquence 2,048 MHZ qui commande un compteur CR1 à 256 pas.

Les adresses de lecture de la table de sinus contenue dans la mémoire MS pour chacun des 256 échantillons sont stockées dans une mémoire ML. Le pas de lecture k de la table pour chacun de signaux est stocké dans une mémoire MK. Les mémoires MA, MK et ML sont adressées par le compteur CR1.

L'incrémentation de la valeur contenue dans la mémoire ML est réalisée par un additionneur AD2 dont une entrée E1 est reliée à la sortie de la mémoire MK et l'autre entrée E2 est reliée à la sortie de la mémoire ML par l'intermédiaire du registre R2. La liaison entre la sortie de l'additionneur AD2 et l'entrée de la mémoire ML comporte un groupe de portes ET P1 validé par le signal t1 de la base de temps. La liaison entre la sortie de la mémoire ML et l'entrée du registre R2 comporte un groupe de portes ET P2 validé par un signal t2 de la base de temps.

La table des sinus comporte 1024 échantillons. Pour l'adresser il suffit donc de 10 e.b. Cependant si les mémoires MK et ML avaient des mots d'une longueur de 10 e.b., la précision du choix de la fréquence, égale à la fréquence la plus basse que le système peut créer et qui correspond à la valeur minimale k, serait suffisante. Pour obtenir des fréquences plus basses, la longueur des mots mémoires MK, ML et du registre R2 a été portée à 16 e.b., et seuls les dix e.b. de poids fort sont utilisés pour l'adressage de la table.

D'une manière connue, la mémoire MS a une capacité de seulement 256 mots, car on utilise les symétries de la fonction sinus. Deux e.b. (e.b. n° 15 et 16 en sortie de registre R2) déterminent le cadran concerné. Les huit e.b. (7 à 14) sont utilisés pour l'adressage de la mémoire MS à travers un group de portes OU EXCLUSIF P3. Ces huit e.g. représentent les valeurs de la fonction dans le premier cadran. L'e.b. n° 15 qui contrôle les portes P3 permet de réaliser la symétrie de la fonction par rapport à l'axe des ordonnées.

L'e.b. n° 16 qui représente le signe est transmis à l'entrée du registre R1 directement à travers un groupe de portes ET P4. Le registre R1 est synchronisé avec le compteur CR1. Pour cela son entrée est contrôlée par la groupe de portes ET P4 validé par le signal d'horloge h1. L'initialisation du générateur GL est faite par un signal RZ de la base de temps reçu à l'entrée de remise à zero du compteur CR1.

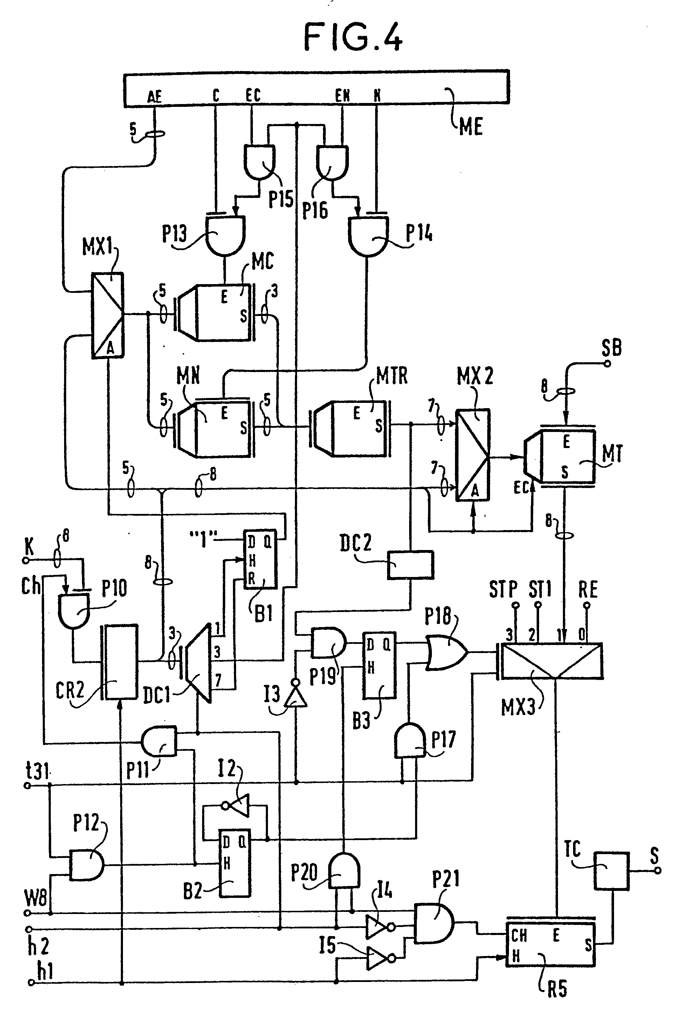

L'additionneur de signaux logarithmiques AL est représenté à la figure 3. Les signaux reçus du générateur GL traversent un groupe de portes ET P5 validé par un signal d'horloge t3 et entrent dans un registre R3 d'une capacité de dix e.b. Les dix e.b. à l'exclusion du signe s du signal sont reçus par un circuit de décompression DEC. Comme on l'a expliqué plus haut ce circuit peut être un simple décaleur éventuellement complété par une table de corrections en mémoire morte. Après décompression on conserve 12 e.b. du signal linéaire. La sortie du circuit DEC est reliée à l'entrée d'un registre R4 à travers un groupe de portes OU EXCLUSIF P6 et un groupe de portes ET P7. Les portes P6 sont contrôlées par le signal s en sortie du registre R3. Les portes P7 sont contrôlées par un signal d'horloge t4. Les sorties du groupe de portes P7 et du registre R4 sont reliées aux entrées d'un additionneur AD3 d'une capacité de 13 e.b. Comme on l'a indiqué précédemment l'addition de signaux linéaires réalisée par l'additionneur AD3 porte sur deux signaux monofréquences fournis consécutivement par la générateur GL: le premier de ces signaux est stocké dans le registre R4, et l'addition est réalisée après apparition du deuxième signal en sortie du groupe de portes P7. Le signal en sortie du circuit DEC comporte 12 e.b., et l'additionneur travaille sur 13 e.b. (12 complétés par le signe). La sortie de l'additionneur AD3 est reliée à un circuit de compression COM par un groupe de portes OU EXCLUSIF P8. Ces portes sont contrôlées par 1' e.b. de poids fort en sortie de l'additionneur AD3 à travers un inverseur I1. Les signaux bifréquences fournis par le circuit AL sont stockés dan un registre de sortie R5 à huit éléments binaires comportant la caractéristique, la mantisse et le signe du signal. L'accès à ce registre est contrôlé par un groupe de portes ET P9 validé par un signal de la base de temps t5

Le distributeur de fréquences DF (figure 4) délivre à sa sortie S des échantillons de fréquences codés sur 8 e.b. La sortie S est reliée à une liaison MIC comportant 32 voies temporelles, et le distributeur a un cycle de fonctionnement dont la durée est égale à la période de fonctionnement de la liaison MIC, c'est-à-dire 125 microsecondes.

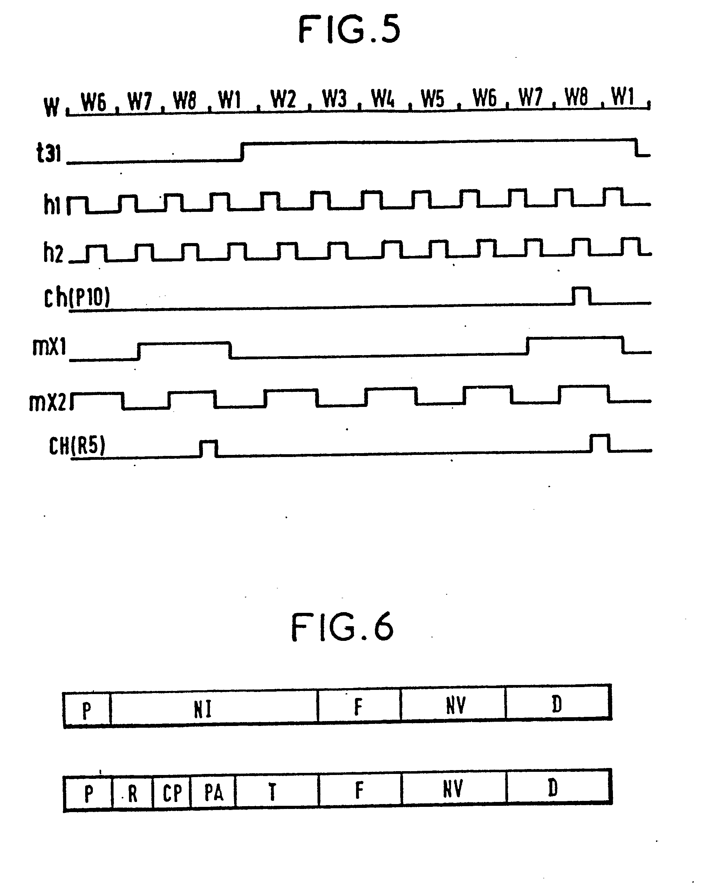

Pour le pilotage de la synchronisation du distributeur, la base de temps fournit les signaux suivants (figure 5):
—deux signaux h1 et h2 décalés, de même fréquence égale à celle de l'apparition des e.b. sur la voie MIC.
—un signal de synchronisation de voie temporelle w8
—un signal de synchronisation de trames t31.

Les opérations internes au distributeur DF sont pilotées par un compteur CR2 à 8 e.b., qui progresse par les impulsions du signal h1. Ce compteur est chargé à chaque cycle evec une valeur câblée K à l'instant où sont présents simultanéments les signaux t31, w8, h2 (groupe de portes ET P10, portes ET P11 et P12), La valeur de K est choisie pour permettre comme on le verra plus loin, le chargement du signal dans un registre de sortie R5 juste avant son émission sur la sortie S.

Les signaux de fréquences provenant de la sortie SB de l'additionneur AL sont reçus à l'entrée d'une mémoire tampon MT de 128 mots. Cette mémoire est adressée par les sept e.b. de poids fort du compteur CR2 à travers un multiplexeur MX2. Le fil qui correspond au poids faible est relié à entrée de positionnement du multiplexeur MX2 et à l'entrée EC qui permet l'écriture de la mémoire MT (signal mx2 figure 5).

En lecture, la mémoire MT est adressée par le module d'échange ME. L'adresse de lecture est contenue dans une mémoire de commandes divisée en deux parties MC, MN. trois e.b. sont fournis par la mémoire MC en fonction du code multifréquence utilisé. La mémoire MN fournit cinq autres e.b. utilisés pour désigner le numéro de la combinaison multifréquence dans un code. Les mémoires MC et MN ont 32 mots, qui permettent chacun d'affecter une combinaison de fréquences à chacune des voies du canal MIC de sortie. En lecture, les mémoires MC et MN sont adressées par les cinq e.b. de poids fort du compteur CR2, ces cinq e.b. désignant le numéro de la voie temporelle en préparation dans le registre R5. Les mémoires MC et MN sont adressées à travers un multiplexeur MX1 qui reçoit sur une entrée l'adresse d'écriture AE provenant du module d'échange, et sur l'autre entrée les 5 poids forts du compteur CR2. Des informations de choix de codes (C) et de choix de fréquences (N) sont reçues du module d'echanges à travers des groupes de portes P13 et P14 contrôlés par des portes ET P15 et P16 respectivement. Les portes P15 et P16 sont validées par des signaux EC et EN du module d'echanges.

Les trois e.b. de poids faible du compteur CR2 permettent de découper chaque voie temporelle en huit instants égaux w (figure 5). Un décodeur DC1 permet de valider successivement chacun de ces 8 instants w1 à w8. Le multiplexeur MX1 est commandé en sortie d'une bascule B1 de type D dont l'entrée de données est à l'état "1". L'entrée d'horloge H de la bascule B1 est reliée à la sortie "1" du décodeur DC1, et l'entrée de remise à zéro R de la bascule B1 est reliée à la sortie "7" du décodeur. La sortie "3" du décodeur contrôle les portes P15 et P16, les sorties du décodeur ne sont validées que pendant le signal h2. La position du multiplexeur MX1 est indiquée à la figure 5 (signal mx1). Pour la valeur 1 du signal l'adressage des mémoires MC et MN provient du compteur CR2. Pour la valeur 0, l'adressage est fourni par le module d'échange (sortie AE).

Pour des raisons de simplicité d'utilisation et de modification des codes à émettre, l'adressage de la mémoire MT n'est pas effectué directement en sortie des mémoires MC et MN, mais à travers une mémoire de traduction MTR.

Pour l'émission des signaux sur le canal MIC en sortie S, le distributeur doit être capable d'émettre un code repos RE dans le cas d'une voie non affectée, et les codes de synchronisation de trames (synchronisation de trames paires STP et de trames impaires STI). La liaison entre le sortie de la mémoire MT et l'entrée du registre R5 est effectuée par un multiplexeur MX3 à 4 entrées effectuées respectivement aux codes STP, STI, à la sortie de la mémoire MT, et au code RE. Le chargement du code STP ou STI est effectué pendant le passage de la voie T31. Le poids fort de l'adressage du multiplexeur MX3 reçoit donc l'information t31 de la base de temps. La parité de la trame est déterminée par une bascule B2 montée en boucle à deux pas. L'entrée H de la bascule B2 est reliée à la sortie de la porte P12. La sortie de la bascule est reliée à l'entrée de poids faible de l'adressage du multiplexeur MX3 à travers une porte ET P17 validée au temps t31, et une porte OU P18. Le choix du code repos est déterminé en fonction d'une valeur du mot lu dans la mémoire de traduction MTR, et enregistré dans une bascule B3. La sortie de la mémoire MTR est reliée à l'entrée de données D de la bascule B3 à travers un décodeur DC2 et une porte ET P19 validée au point t31 à travers un inverseur I3. La sorte de la bascule B3 est reliée à une entrée de la porte OU P18. L'entrée d'horloge de la bascule B3 est commandée à l'instant w8 h2 (porte P20). Le signal de chargement CH du registre R5 (figure 5) est fourni par une porte ET P21 commandée aux instants w8, h2 à travers un inverseur I4, et h1 à travers un inverseur I5.

Le fonctionnement du dispositif de distribution est donc le suivant:
—pendant un cycle de fonctionnment, la mémoire MT est chargée 128 fois par le signal fourni en sortie de l'additionneur AL, pendant la présence du signal mx2.
—pour chaque voie temporelle, un mot de la mémoire tampon est transmis dans le registre R5. La mémoire MT est adressée par les mémoires MC et MN, elles-mêmes adressées par le compteur CR2 (pendant le signal mx1).
—Pendant la voie temporelle t31, le registre R5 est chargé avec le contenu d'un code de synchronisation de trames.
—A chaque voie temporelle, le calculateur a la possibilité d'intervenir par l'intermédiaire du module d'échanges pour modifier le contenu des mémoires MC et/ou MN (instant w3 h2).

Dans cette application, la commande du dispositif suivant l'invention par le calculateur peut être réalisée par l'intermédiaire d'une liaison série asynchrone. Pour la commande de plusieurs dispositifs, la liaison d'émission des messages du calculateur vers les dispositifs sera par exemple unique et multiplée sur les différents dispositifs, et on pourra avoir une liaison de comptes-rendus de messages pour chaque dispositif.

Il est connu par exemple d'utiliser un module d'échanges comportant un registre à décalage dans lequel est reçu en entrée le message série provenant du calculateur, et dans lequel est composé le message retour. On se reportera par exemple au brevet français n° 79 11593 intitulé "Système de raccordement des tables d'opératrices à un central à réseau de connexion numérique". Les messages seront par exemple de la forme représentée à la figure 6. Le message aller comporte un code de parité P, un numéro d'identification NI qui permet au dispositif destinataire du message de le prendre en compte, un code de fonction F qui précise l'opération à réaliser, un numéro de voie NV qui indique le numéro de la voie du canal numérique MIC à laquelle on veut affecter la fréquence d'un code, et une information de données D précisant le code à utiliser et le numéro de la fréquence.

Le message retour comporte un code de parité P, un code de reconnaissance R indiquant que le module d'échanges a reconnu par le numéro NI du message aller que le message lui était destiné, un code de comparaison CP utilisé dans le cas où la fonction F implique un test, un code PA indiquant la parité du message aller, un code T indiquant le type du distributeur qui a traité le message (ceci dans le cas où le calculateur pilote plusieurs types d'organes par la même liaison aller), et les codes F, NV et D qui ont la même signification que dans le message aller.

## Revendications

1. Emetteur numérique de fréquences comportant un générateur (GL) fournissant des signaux de codes monofréquences par exploration cyclique d'une table (MS) sous le contrôle d'une base de temps (BT), ladite table comportant la valeur de la fonction sinus sous forme compressée, le générateur comportant des moyens d'amplification (MA, AD1) des signaux compressés et l'émetteur numérique comportant un additionneur (AL) permettant la combinaison de deux signaux monofréquences pour produire un signal bifréquence compressé, caractérisé par le fait qu'il comporte un distributeur de fréquences (DF) formé d'une mémoire (MT) pour enregistrer les signaux bifréquences fournis par l'additionneur (AL), de moyens d'émission (R5, MX3, CR2) desdits signaux bifréquences sur un canal numérique MIC et de moyens de sélection (MX1, MX2, MC, MN) pilotés par un calculateur (CAL) par l'intermédiaire d'un module d'échanges (ME) lesdits moyens de sélection permettant d'affecter à toute voie du canal numérique MIC le contenu de n'importe quel mot de ladite mémoire (MT).

2. Emetteur numérique suivant la revendication 1 comportant un générateur numérique cyclique, permettant d'émettre à chaque cycle au moins un échantillon de chacune des fréquences utilisées avec un niveau d'amplification qui dépend du code multifréquence et de la fréquence particulière émise, et comportant une deuxième mémoire (MS) contenant ladite table, une troisième mémoire (MA) contenant les coefficients d'amplification sous forme logarithmique, les sorties des deuxième et troisième mémoires (MS) et (MA) étant reliées à un deuxième additionneur (AD1), caractérisé par le fait qu'il comporte une quatrième mémoire (ML) contenant pour chaque signal monofréquence l'adresse dans la deuxième mémoire (MS) du prochain échantillon à émettre, une cinquième mémoire (MK) contenant pour chaque échantillon l'incrément à ajouter à chaque cycle au contenu du mot de la quatrième mémoire (ML), les troisième, quatrième, cinquième mémoires (MA, MK, ML) étant adressées par un compteur (CR1) piloté par la base de temps (BT) et ayant une capacité égale au nombre d'échantillons à émettre à chaque cycle.

3. Emetteur numérique suivant la revendication 2, caractérisé par le fait que seuls les poids forts du mot de la quatrième mémoire (ML) sont utilisés pour l'adressage de la deuxième mémoire (MS).

4. Emetteur numérique suivant la revendication 1, caractérisé par le fait qu'il comporte un compteur (CR2) piloté par la base de temps (BT), la mémoire étant une mémoire tampon (MT) recevant de la sortie (SB) de l'additionneur (AL), un échantillon de chacun des signaux bifréquences utilisés, et adressée en écriture par le compteur (CR2), et une mémoire de commande (MC, MN) dont la capacité est égale au nombre de voies du canal MIC de sortie, chaque mot de la mémoire de commande comportant l'adresse de lecture de la mémoire tampon (MT), et ladite mémoire de commande étant adressée en lecture par les poids forts du compteur (CR2) qui indique le numéro de la voie (MIC) en cours d'émission, et en écriture par la calculateur (CAL) pour permettre la modification de l'affectation des signaux bifréquences aux voies du canal MIC.

5. Emetteur numérique suivant la revendication 4, caractérisé par le fait que lesdits moyens d'émission comportent un registre à décalage (R5) de capacité égale à celui d'une voie numérique du canal MIC, et dont l'entrée est reliée à la sortie d'un multiplexeur (MX3) qui permet de charger dans le registre à décalage (R5) soit le signal en sortie de la mémoire tampon (MT), soit un code repos (RE) en cas de voies non affectées, soit un signal de synchronisation (STP, STI).

6. Emetteur numérique suivant la revendication 4, caractérisé par la fait que la sortie de la mémoire de commande (MC, MN) est reliée à l'entrée d'adressage de lecture de la mémoire tampon (MT) par l'intermédiaire d'une mémoire de traduction (MTR).

## Patentansprüche

1. Digitaler Frequenzgeber mit einem Generator (GL), der monofrequente Kodesignale durch zyklische Abfrage einer Tabelle (MS) unter Steuerung eines Basistakts (BT) liefert, wobei die Tabelle den Wert der Sinusfunktion in komprimierter Form enthält und der Generator Verstärkungsmittel (MA, AD1) für die komprimierten Signale aufweist, und mit einem Addierer (AL), der die Kombination zweier monofrequenter Signale ermöglicht und ein komprimiertes Zweifrequenz-Signal erzeugt, dadurch gekennzeichnet, daß er einen aus einem Speicher (MT) gebildeten Frequenzverteiler (DF), in dem die vom Addierer (AL) gelieferten Zweifrequenz-Signale eingeschrieben werden, Mittel (R5, MX3, CR2) zum Aussenden dieser Zweifrequenz-Signale auf einem digitalen PCM-Multiplex und Auswahlmittel (MX1, MX2, MC, MN) besitzt, die von einem Rechner (CAL) über einen Austauschmodul (ME) gesteuert werden und es erlauben, den Inhalt eines beliebigen Worts des Speichers (MT) einem beliebigen PCM-Kanal zuzuordnen.

2. Digitaler Geber nach Anspruch 1, mit einem zyklischen digitalen Generator, der es ermöglicht, in jedem Zyklus mindestens eine Tastprobe jeder der verwendeten Frequenzen mit einem Verstärkungspegel auszusenden, der vom Multifrequenzkode und der einzelnen ausgesandten Frequenz abhängt, und mit einem zweiten Speicher (MS), der die Tabelle enthält, wobei ein dritter Speicher (MA) die Verstärkungskoeffizienten in logarithmischer Form enthält und die Ausgänge des zweiten und des dritten Speichers (MS) und (MA) mit einem zweiten Addierer (AD1) verbunden sind, dadurch gekennzeichnet, daß er einen vierten Speicher (ML) aufweist, der für jedes monofrequente Signal im zweiten Speicher (MS) die Adresse der folgenden auszusendenden Tastprobe enthält, wobei ein fünfter Speicher (MK) für jede Tastprobe das bei jedem Zyklus dem Inhalt des Worts des vierten Speichers (ML) hinzuzufügende Inkrement enthält und der dritte, der vierte und der fünfte Speicher (MA, MK, ML) von einem Zähler (CR1) adressiert werden, der von der Zeitbasis (BT) gesteuert wird und dessen Kapazität gleich der Anzahl der bei jedem Zyklus auszusendenden Tastproben ist.

3. Digitaler Geber nach Anspruch 2, dadurch gekennzeichnet, daß nur die höher gewichteten Teile des Worts des vierten Speichers (ML) für die Adressierung des zweiten Speichers (MS) verwendet werden.

4. Digitaler Geber nach Anspruch 1, dadurch gekennzeichnet, daß er einen von der Zeitbasis (BT) gesteuerten Zähler (CR2) aufweist, wobei der Speicher ein Pufferspeicher (MT) ist, der vom Ausgang (SB) des Addierers (AL) eine Tastprobe jedes der verwendeten Zweifrequenz-Signale zugeführt erhält und vom Zähler (CR2) die Schreibadresse geliefert bekommt, und daß er einen Befehlsspeicher (MC, MN) aufweist, dessen Kapazität gleich der Anzahl der Kanäle des Ausgangsmultiplex PCM ist, wobei jedes Wort des Befehlsspeichers die Leseadresse des Pufferspeichers (MT) enthält und die Leseadresse des Befehlsspeichers von den höher gewichteten Teilen des Zählers (CR2) gebildet wird, der die Nummer des gerade gesendeten PCM-Kanals angibt, während die Schreibadresse von Rechner (CAL) gebildet wird, um die Änderung der Zuordnung der Zweifrequenz-Signale zu den Kanälen des PCM-Multiplex zu ermöglichen.

5. Digitaler Geber nach Anspruch 4, dadurch gekennzeichnet, daß die Sendemittel ein Schieberegister (R5) aufweisen, dessen Kapazität gleich der eines digitalen Kanals des PCM-Multiplex ist und dessen Eingang mit dem Ausgang eines Multiplexers (MX3) verbunden ist, der es ermöglicht, das Schieberegister (R5) entweder mit dem Ausgangssignal des Pufferspeichers (MT) oder einem Ruhekode (RE) im Fall nicht zugeordneter Kanäle oder einem Synchronisationssignal (STP, STI) zu laden.

6. Digitaler Geber nach Anspruch 4, dadurch gekennzeichnet, daß der Ausgang des Befehlsspeichers (MC, MN) mit dem Lese-Adressiereingang des Pufferspeichers (MT) über einen Übersetzungsspeicher (MTR) verbunden ist.

**Claims**

1. A digital frequency sender comprising a generator (GL) that supplies mono-frequency code signals by cyclically scanning a table (MS) under the control of a time base (BT), said table comprising the value of the sine function in compressed form, the generator comprising amplifier means (MA, AD1) for amplifying the compressed signals, and the digital sender comprising an adder (AL) for combining two single-frequency signals to produce a compressed two-frequency signal, characterized in that it comprises a frequency distributor (DF) made of a memory (MT) for storing the two-frequency signals supplied by the adder (AL), sender means (R5, MX3, CR2) for sending the said two-frequency signals to a digital PCM multiplex, and selector means (MX1, MX2, MC, MN) controlled by a computer (CAL) via a data exchange module (ME), said selector means being arranged to apply the contents of any word in the said memory (MT) to any channel of the digital PCM multiplex.

2. A digital sender according to claim 1, comprising a cyclical digital generator which is capable to send during each cycle at least one sample of each of the frequencies used at a level of amplification that depends on the multifrequency code and on the particular frequency being sent, and comprising a second memory (MS) containing the said table, a third memory (MA) containing the amplification coefficients in a logarithmic form, with the outputs of the second and third memories (MS) and (MA) being connected to a second adder (AD1), characterized in that it comprises a fourth memory (ML) containing, for each single-frequency signal, in the second memory (MS) the address of the next sample to be sent, a fifth memory (MK) containing, for each sample, the increment to be added at each cycle to the contents of the word of the fourth memory (ML), with the third, fourth and fifth memories (MA, MK, ML) being addressed by a counter (CR1) which is controlled by the time base (BT) and has a capacity equal to the number of samples to be sent during each cycle.

3. A digital sender according to claim 2, characterized in that only the more significant parts of the word in the fourth memory (ML) are used to address the second memory (MS).

4. A digital sender according to claim 1, characterized in that it includes a counter (CR2) driven by the time base (BT), the memory being a buffer memory (MT) that receives from the output (SB) of the adder (AL) a sample of each of the used two-frequency signals, and which is addressed for writing by the counter (CR2), and a control memory (MC, MN) whose capacity is equal to the number of channels in the output PCM multiplex, each word of the control memory comprising the read address of the buffer memory (MT), and the said control memory being addressed for reading by the more significant parts of the counter (CR2) which indicates the number of the PCM channels to which sending is taking place, and for writing by the computer (CAL) to enable modification of the assignment of the two-frequency signals to the channels of the PCM multiplex.

5. A digital sender according to claim 4, characterized in that said sender means comprise a shift register (R5) of capacity equal to that of a digital channel of the PCM multiplex, and whose input is connected to the output of a multiplexer (MX3) which is capable to load the shift register (R5) either with the signal at the output of the buffer memory (MT) or with an idle code (RE) for non-assigned channels, or else with a synchronizing signal (STP, STI).

6. A digital sender according to claim 4,

**0 034 336**

characterized in that the output of the control memory (MC, MN) is connected to the read address input of the buffer memory (MT) via a translator memory (MTR).

# FIG.1

# FIG.3

1

# FIG.2

0 034 336

FIG.4

# FIG.5

| W | W6 | W7 | W8 | W1 | W2 | W3 | W4 | W5 | W6 | W7 | W8 | W1 |

t31

h1

h2

ch(P10)

mX1

mX2

CH(R5)

# FIG.6

| P | NI | F | NV | D |

| P | R | CP | PA | T | F | NV | D |

4